# EUROPEAN PATENT APPLICATION

(11) **EP 3 943 991 A1**
(43) Date of publication of application: **26.01.2022**
(21) Application number: 20924977.0
(22) Date of filing: 28.05.2020
(51) Int. Cl.: G02B 6/42, G01B 11/16

(54) **OPTICAL FIBER FIXING METHOD AND MEASUREMENT APPARATUS USING SAME**

(71) Applicant: FBG Korea Inc., Yuseong-gu Daejeon 34016 (KR)
(72) Inventor: LEE, Geum Suk, Chungcheongnam-do 32824 (KR)
(74) Representative: Müller Verweyen
(86) International application number: PCT/KR2020/006881
(87) International publication number: WO 2021/241778

(57) **Abstract**

Disclosed are a method of fixing an optical fiber and a measuring apparatus using the same, in which the method includes (a) heating a fixing portion where the optical fiber is to be fixed to an object, and (b) forming a concavo-convex structure by melting the heated fixing portion. The optical fiber is fixed to the object by filling an adhesive or filler in a state in which the fixing portion having the concavo-convex structure is disposed in an insertion space formed in the object. The optical fiber and the object can be firmly fixed using the mechanical coupling structure by forming the concavo-convex portion in a part where the optical fiber is to be fixed, and slip can be prevented from occurring between the cladding and the covering jacket.

## Description

### [Technical Field]

The present invention relates to an optical fiber fixing method, and more specifically, to an optical fiber fixing method for fixing an optical fiber applied to a measuring device for measuring amounts of various deformations to an object, and a measuring apparatus using the same.

### [Background Art]

An optical fiber is also called an optic fiber, and a cable made by bundling several strands of the optical fiber is called an optical cable and the use of the optical cable is gradually increased.

In general, the optical fiber can be manufactured by using a synthetic resin, but the optical fiber is mainly manufactured by using glass having excellent transparency.

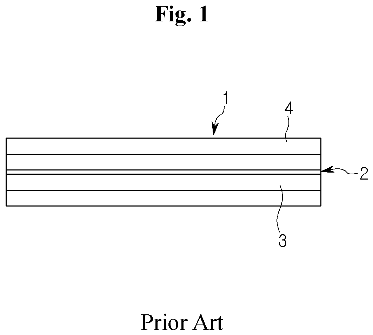

FIG. 1 is a sectional view of an optical fiber according to a related art.

As shown in FIG. 1, an optical fiber 1 is formed in a dual cylindrical shape including a central core 2 and a cladding 3 surrounding the periphery of the core 2, and the cladding 3 is coated with a covering jacket 4 to protect the optical fiber 1 from external impact.

The total diameter of the optical fiber 1, excluding the covering jacket 4, is one hundred to several hundred µm (normalized to 125 pm), and since the refractive index of the core 2 is higher than that of the cladding 3, light is focused on the core 2 and travels along the core 2 without escaping to the outside.

A core 2 having a diameter of several µm is called a single-mode optical fiber, and a core 2 having a diameter of several tens of µm is called a multi-mode optical fiber. The optical fiber is classified as a step-type optical fiber and a heel-type optical fiber according to the refractive index distribution of the core 2.

Such an optical fiber has no interference or signal disturbance by external electromagnetic waves, makes it difficult to eavesdrop, is storing against bending although it is small and light, can accommodate many communication lines in one optical fiber, and is strong against variation of an external environment.

Meanwhile, a technique for fixing an optical fiber to an object is disclosed in Patent Documents 1 and 2 below.

Since the optical fiber is coated with a covering jacket of about 245 to 250 µm using an acrylate or the like due to the risk of breakage, it is not easy to fix the optical fiber, and even if the optical fiber fixed, slip occurs between the cladding and the covering jacket as times go by..

That is, when the optical fiber sensor is applied to a measuring device such as a sensor that measures accurate physical deformation of an object, it is necessary to fix the optical fiber sensor by attaching the cladding of the optical fiber sensor to the object, and in this case, a coating layer of the optical fiber sensor at an attachment point needs be peeled off.

However, a peeled part of the optical fiber sensor generally has a lower strength compared to other parts of the optical fiber sensor, and when deformation occurs, the peeled part is easily broken or it is difficult to attach the optical fiber sensor to a sensor package.

As described above, although the covering jacket has an advantage of protecting the optical fiber, if an object to be tested is directly attached to a surface of the covering jacket in a state in which the covering jacket of the optical fiber is not partially peeled off, slip occurs between the jacket and the cladding.

For this reason, it is impossible to accurately measure the tensile behavior due to the tensile force and the behavior due to long-term deformation by using the optical fiber sensor.
(Patent Document 1) Korean Unexamined Patent Publication No. 10-2012-0010296 (published on February 3, 2012)
(Patent Document 2) Korean Patent Registration No. 10-1512402 (issued on April 15, 2015)

However, Patent Document 1 has a problem in that the cladding of the optical fiber is damaged during the partial peel-off process since it is necessary to partially peel off the covering jacket of the optical fiber to attach the covering jacket to the object.

In addition, according to Patent Document 2, as an epoxy resin is cured by irradiating UV light using a UV laser to fix the optical fiber, there is a problem in that the facility structure and work process are complicated, and the cost is increased.

Further, the method and the structure for fixing the optical fiber according to the related art has a limitation to completely prevent the slip occurring between the cladding and the covering jacket in a state in which the optical fiber is fixed to the object.

Therefore, when the optical fiber sensor is applied to a measuring device for measuring amounts of various deformations, it is necessary to develop a technique capable of easily fixing the optical fiber sensor.

### [Disclosure]

### [Technical Problem]

The present invention has been made to solve the above problems, and an object of the present invention is to provide a method of fixing an optical fiber capable of easily fixing an optical fiber sensor to an object.

Another object of the present invention is to provide a measuring apparatus for measuring various amounts of deformations using an optical fiber fixing method by forming a mechanical coupling structure in a part of an object to be fixed.

### [Technical Solution]

In order to achieve the above object, a method of fixing an optical fiber according to the present invention includes (a) heating a fixing portion where the optical fiber is to be fixed to an object, and (b) forming a concavo-convex structure by melting the heated fixing portion, wherein the optical fiber is fixed to the object by filling an adhesive or filler in a state in which the fixing portion having the concavo-convex structure is disposed in an insertion space formed in the object.

In addition, in order to achieve the above object, there is provided a measuring apparatus using an optical fiber fixing method according to the present invention, wherein an optical fiber is fixed to an object using a method of fixing the optical fiber, and an amount of deformations of the object is measured by allowing light to be incident onto one end of the fixed optical fiber and analyzing reflected light.

### [Advantageous Effects]

As described above, according to the method of fixing the optical fiber and the measuring apparatus using the same of the present invention, the optical fiber and the object can be firmly fixed using the mechanical coupling structure by forming the concavo-convex portion in the part where the optical fiber is to be fixed, and slip can be prevented from occurring between the cladding and the covering jacket.

That is, according to the present invention, the concavo-convex portion is formed by heating or melting a part of the cladding of the optical fiber and the covering jacket, and an adhesive or filler is filled in the concavo-convex portion, thereby fixing the optical fiber and the object.

Therefore, according to the present invention, it is possible to prevent slip between the cladding and the covering jacket, which may occur in the optical fiber fixed to the object as times go by.

### [Description of Drawings]

FIG. 1 is a sectional view of an optical fiber according to the related art.
FIG. 2 is a block diagram illustrating the steps of a method of fixing an optical fiber according to a preferred embodiment of the present invention.
FIGS. 3 to 4 are exemplary views illustrating the optical fiber fixing method shown in FIG. 2.
FIG. 5 is a partially enlarged view of a fixing portion formed by using an optical fiber fixing method according to another embodiment of the present invention.

### [Best Mode]

### [Mode for Invention]

Hereinafter, an optical fiber fixing method and a measuring apparatus using the same according to a preferred embodiment of the present invention will be described in detail with reference to the accompanying drawings.

In the following description, a method of fixing a fiber bragg grating sensor (hereinafter referred to as 'FBG sensor') in which two or more single point type optical fiber sensors are installed in one optical fiber sensor and a measuring apparatus using the same will be described.

The FBG sensor is an optical device that generates a grating by inducing a change in refractive index by periodically scanning a laser in an ultraviolet band to the optical fiber core to which germanium (Ge) is added, and reflects light of a specific wavelength determined by a spacing of the generated grating.

When a broadband spectrum is incident onto one end of the FBG sensor, a wavelength component satisfying the condition is reflected from the optical fiber grating, and the remaining wavelength components pass through and appear on an optical spectrum analyzer.

In the present invention, a fixing groove and a fixing protrusion may be formed on a part where the optical fiber sensor is to be fixed by irradiating a laser beam onto the object in order to measure various amounts of deformations by fixing the optical fiber sensor to the object.

That is, when a mechanical processing such as sanding using sandpaper is performed on the surface of the optical fiber, the cladding and the coating may be damaged.

Therefore, according to the present invention, instead of the mechanical processing, the optical fiber is fixed using a mechanical coupling structure by heating or partially melting a part where the optical fiber is to be fixed to increase the adhesion area with the object and to enhance the friction force of the adhesion surface.

Accordingly, the present invention can prevent slip between the covering jacket and the cladding in a state in which the optical fiber is fixed to the object, thereby improving the precision and reliability of the measurement value of the measuring apparatus.

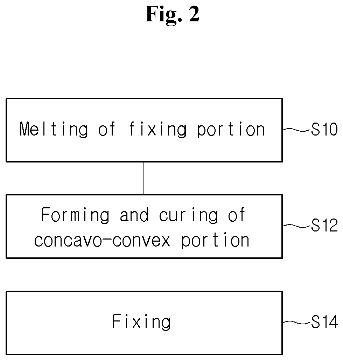

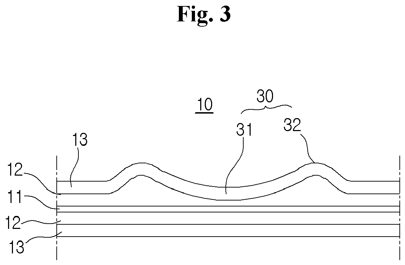

FIG. 2 is a block diagram illustrating the steps of a method of fixing an optical fiber according to a preferred embodiment of the present invention, and FIGS. 3 to 4 are exemplary views illustrating the optical fiber fixing method shown in FIG. 2.

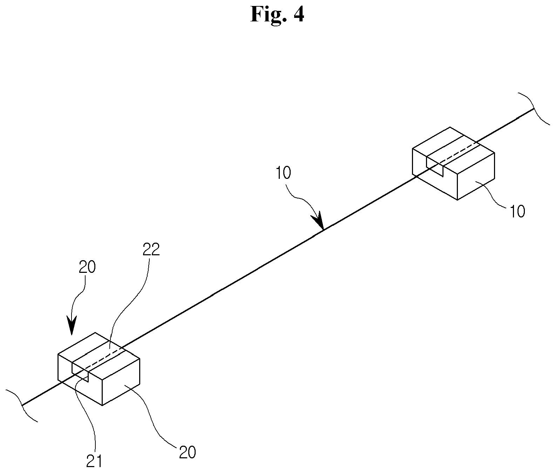

FIG. 3 is an enlarged sectional view of a fixing portion of an optical fiber to be fixed to an object, and FIG. 4 shows a state in which both ends of the optical fiber are fixed to the object.

Hereinafter, terms indicating directions such as 'left', 'right', 'front', 'rear', 'up' and 'down' will be defined based on the state shown in each drawing.

As shown in FIGS. 2 to 4 , the method of fixing the optical fiber according to a preferred embodiment of the present invention may include the steps of (a) heating a fixing portion where the optical fiber 20 is to fixed to the object 20 (S10) and forming a concavo-convex structure 30 by melting the heated fixing portion (S12), in which (c) the fixing portion having the concavo-convex structure 30 is disposed in an insertion space 21 formed in the object 20 and an adhesive or filler is filled to fix the optical fiber having the concavo-convex structure to the object 20 (S14).

Accordingly, the measuring apparatus using the optical fiber fixing method according to the preferred embodiment of the present invention may measure the deformation rate of the structure or various amounts of deformations such as temperature and humidity by allowing light to be incident onto one end of the optical fiber and analyzing the reflected light in a state in which the optical fiber 10 is firmly fixed to the object 20 by using the concavo-convex portion formed in the fixing portion.

More specifically, in step S10, the fixing portion of the optical fiber 10 is melted by a laser beam irradiated from a laser generator (not shown) as shown in FIG. 3.

In this case, the fixing portion may be melted together with a portion of the cladding 12 surrounding the core 11 and the covering jacket 13.

In step S12, the concavo-convex structure 30 including the fixing groove 31, which is formed concavely more than the surface of the optical fiber 10 while being melted by the laser beam, and the fixing protrusion 32 formed convexly at the edge of the fixing groove 31 more than the surface of the optical fiber 10 may be formed at the fixing portion.

The fixing groove 31 may be formed in a substantially hemispherical shape, or the shape and depth of the fixing groove 31 may be variously changed according to the irradiation direction and angle of the laser beam.

The fixing protrusion 32 may be formed in a substantially ring shape when viewed from the top along the edge of the fixing groove 31.

In addition, the height and shape of the fixed protrusion 32 may be variously changed as the melting depth of the fixing protrusion 32 varies according to the irradiation direction, angle, and intensity of the laser beam.

The fixing groove 31 and the fixing protrusion 32 formed in the fixing portion as described above may increase the adhesive area of the fixing portion with respect to an adhesive, such as epoxy, or a filler 22 and may improve friction force and fixing force of the adhesive surface while being cured.

Therefore, according to the present invention, it is possible to increase the fixing force between the optical fiber and the object and effectively prevent slip between the cladding and the covering jacket by using the mechanical coupling structure including the concavo-convex portion formed in the fixing portion.

Meanwhile, as shown in FIG. 4, an insertion space 21 into which the optical fiber 10 is inserted may be formed in the object 20 to which the optical fiber 10 is fixed.

The insertion space 21 may have a substantially rectangular section.

However, the present invention is not limited thereto, and the present invention can be modified such that the insertion space 21 may have various sectional shapes such as a triangular shape, a 'V' shape, a 'U' shape, and the like.

Thus, in step S14, the operator places the fixing portion of the optical fiber 10 having the concavo-convex structure 30 in the insertion space 21 of the object 20, and fills the adhesive or filler 22 into the insertion space 21 t fix the optical fiber 10 to the object 20.

In this case, the optical fiber 10 may be disposed such that the adhesive surface on which the concavo-convex structure is formed faces upward, or the optical fiber may be disposed to face one side in order to increase the fixing force.

As described above, according to the present invention, the optical fiber and the object can be firmly fixed by using the mechanical coupling structure including the concavo-convex structure formed in the fixing portion, and slip between the cladding and the covering jacket can be effectively prevented.

Meanwhile, although the present embodiment has been described in that the concavo-convex structure is formed by irradiating the fixing portion with a laser beam to melt the fixing portion, the present invention is not necessarily limited thereto.

That is, the present invention can be modified to melt the fixing portion using a heat source capable of locally heating the fixing portion, other than a laser beam.

In addition, the present invention may be modified to form the concavo-convex portion using a chemical reaction, other than the method of heating the fixing portion.

For example, in the optical fiber fixing method according to another embodiment of the present invention, the concavo-convex structure may be formed by locally dissolving the fixing portion of the optical fiber using a material capable of dissolving a part of the cladding and the covering jacket of the optical fiber, such as a fluorine gas or a hydrofluoric acid (HF) solution.

Next, the present invention may be modified to melt a part of the cladding portion of the fixing portion in a state in which the covering jacket of the portion where the optical fiber is to be fixed to the object is partially peeled off.

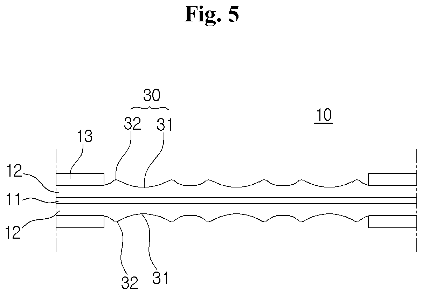

For example, FIG. 5 is a partially enlarged view of a fixing portion using an optical fiber fixing method according to another embodiment of the present invention.

In the optical fiber fixing method according to another embodiment of the present invention, as shown in FIG. 5, a part of the cladding 12 of the optical fiber 10 may be locally heated or melted to form the concavo-convex structure 30 in a state in which the covering jacket 13 formed on the fixing potion of the optical fiber 10 is partially peeled off.

As described above, according to the present invention, the concavo-convex portion is formed on the cladding of the packaged optical fiber sensor, and the mechanical coupling structure having the concavo-convex portion is used to firmly couple the optical fiber to the object, so that slip between the cladding and the covering jacket can be prevented.

Meanwhile, according to the present invention, as shown in FIG. 5, the concavo-convex structure formed on the one surface of the optical fiber may also be symmetrically formed on both sides of the optical fiber, or a plurality of concavo-convex structures may be formed at regular angular intervals along the outer circumferential surface of the optical fiber. In addition, it is also possible to form a plurality of concavo-convex structures on the surface of the optical fiber at regular intervals along the longitudinal direction.

Although the invention made by the present inventors has been described in detail according to the above embodiments, the present invention is not limited to the above embodiments, and various modifications can be made without departing from the scope of the present invention.

### [Industrial Applicability]

The present invention can be applied to a method of fixing an optical fiber and a technique for a measuring apparatus using the same, which can firmly fix the optical fiber and an object using a mechanical coupling structure by forming a concavo-convex portion in a part where the optical fiber is to be fixed and can prevent slip between a cladding and a covering jacket.

## Claims

1. A method of fixing an optical fiber, the method comprising:
(a) heating a fixing portion where the optical fiber is to be fixed to an object; and
(b) forming a concavo-convex structure by melting the heated fixing portion,
wherein the optical fiber is fixed to the object by filling an adhesive or filler in a state in which the fixing portion having the concavo-convex structure is disposed in an insertion space formed in the object.

2. The method of claim 1, wherein the concavo-convex structure includes: a fixing groove formed concavely than a surface of the optical fiber while being heated and melted by a laser beam or a heat source; and
a fixing protrusion formed at an edge of the fixing groove to be more convex than the surface of the optical fiber,
wherein the optical fiber is fixed to the object by using a mechanical coupling structure formed by the concavo-convex structure formed in the fixing portion.

3. The method of claim 2, wherein the fixing groove and the fixing protrusion formed in the concavo-convex structure have a shape, a size, or a height that is adjusted according to a direction, an angle, and strength of the laser beam or heat source.

4. The method of claim 1, wherein the fixing portion is melted together with a part of a cladding and a covering jacket in step (a).

5. The method of claim 1, wherein, in step (a), the fixing portion is a part of the cladding that is melted in a state in which a covering jacket is partially peeled off.

6. The method of claim 1, wherein the fixing portion is locally melted by fluorine gas or hydrofluoric acid solution instead of heating the fixing portion in step (a).

7. A measuring apparatus using an optical fiber fixing method, wherein an optical fiber is fixed to an object using a method of fixing the optical fiber according to one of claims 1 to 6, and an amount of deformations of the object is measured by allowing light to be incident onto one end of the fixed optical fiber and analyzing reflected light.
